# EUROPÄISCHE PATENTSCHRIFT

(11) **EP 2 112 797 B1**
(45) Veröffentlichungstag und Bekanntmachung des Hinweises auf die Patenterteilung: **01.03.2017**
(21) Anmeldenummer: 09004959.4
(22) Anmeldetag: 03.04.2009
(51) Int. Cl.: G06F 21/34, G06F 21/73, G08G 1/00, H04L 12/40, H04L 29/06, H04L 29/08

(54) **Verfahren zum Ermöglichen des Austauschens von Daten zwischen einer Datenverarbeitungseinrichtung ausserhalb und einer Datenverarbeitungseinheit innerhalb eines Fahrzeugs sowie Kraftfahrzeug**
Method for allowing the exchange of data between a data processing appliance outside and a data processing unit inside a vehicle and motor vehicle
Procédé destiné à permettre l'échange de données entre un dispositif de traitement de données à l'extérieur et une unité de traitement de données à l'intérieur d'un véhicule et véhicule automobile

(30) Priorität: 09.04.2008 DE 102008017946
(43) Veröffentlichungstag der Anmeldung: 28.10.2009
(73) Patentinhaber: Audi AG, 85045 Ingolstadt (DE)
(72) Erfinder: Ebner, André, Dr., 85051 Ingolstadt (DE); Hanke, Alexander, 85051 Ingolstadt (DE); Wischhof, Lars, Dr., 85051 Ingolstadt (DE)
(74) Vertreter: Thielmann, Frank

(56) Entgegenhaltungen:
- EP-A- 0 870 654
- EP-A- 1 517 512
- EP-A- 1 582 961
- DE-A1- 19 650 048

## Beschreibung

Die Erfindung betrifft ein Verfahren zum Ermöglichen des Austauschens von Daten zwischen einer zentralen, mit einem Netzwerk verbundenen oder verbindbaren (z.B. ortsfesten) Datenverarbeitungseinrichtung und einer zweiten Datenverarbeitungseinheit, die sich in einem Kraftfahrzeug befindet, und die zur drahtlosen Verbindung mit dem Netzwerk eingerichtet ist. Die Erfindung betrifft auch ein Kraftfahrzeug, das die Durchführung des erfindungsgemäßen Verfahrens ermöglicht.

Da in Kraftfahrzeugen zunehmend mehr Daten verarbeitet werden und man häufig wünscht, diese Daten voraufzubereiten oder zu analysieren und dann gegebenenfalls nachzubearbeiten, ist ein Austausch von Daten zwischen einer in dem Kraftfahrzeug befindlichen Datenverarbeitungseinheit und einer außerhalb des Kraftfahrzeugs befindlichen Datenverarbeitungseinheit, z.B. einem Personalcomputer, der einem Kraftfahrzeugführer gehört, wünschenswert.

Es werden häufig Reisen an einem Personalcomputer geplant, z.B. Reiseziele in einem Kartenwerk gesucht. Es wäre wünschenswert, könnte ausgehend vom Personalcomputer ein Reiseziel als Navigationsziel an das Navigationssystem des Fahrzeugs übermittelt werden.

Es kann auch sein, dass man im Kraftfahrzeug (Internet-)Portale nutzen möchte, welche Nachrichten anbieten. Wünschenswert wäre, wenn man am benutzerfreundlichen Personalcomputer die einzelnen Portale aussuchen könnte, innerhalb der Portale festlegen könnte und welche Inhalte man im Fahrzeug dargeboten erhalten möchte, und wenn dann entsprechende Informationen an die Datenverarbeitungseinheit in dem Fahrzeug übermittelt werden können.

Auch in umgekehrter Richtung, vom Kraftfahrzeug an einen Personalcomputer, wäre eine Datenübermittlung wünschenswert. Z.B. wäre es wünschenswert, wäre der Kilometerstand des Kraftfahrzeugs am Personalcomputer bekannt. Diese Information ist hilfreich, wenn der Kilometerstand mit Hilfe eines am Personalcomputer zu entwerfenden Briefs der Kraftfahrzeugversicherung mitgeteilt werden soll. Auch die Kenntnis weiterer Servicedaten des Kraftfahrzeugs am Personalcomputer könnte hilfreich sein. Beispielsweise könnte der Zeitpunkt für einen Werkstattbesuch oder Ölwechsel in einen im Personalcomputer geführten Kalender eingetragen werden.

Ein Datenaustausch der genannten Art wird beispielsweise durch das System BMW Connected Drive ermöglicht. Hierbei wird eine Verbindung zwischen einem Benutzerkonto im Kraftfahrzeug und einem Benutzerkonto auf einem zentralen Server über die Telefonnummer einer dauerhaft im Fahrzeug installierten Mobilfunkkarte hergestellt. Dieses System ist nicht ausreichend flexibel, wenn eine Mehrzahl von Benutzern ein- und dasselbe Kraftfahrzeug benutzen. Eine Verknüpfung zwischen Kraftfahrzeug und Server ist durch den Kraftfahrzeughersteller oder seine Servicewerkstätten eingerichtet worden. Einem Benutzer ist es nicht möglich, etwas an bestehenden Verknüpfungen zu ändern, insbesondere für sich selbst ein Benutzerkonto auf dem Kraftfahrzeug einzurichten, das auf Daten von dem Server zugreifen kann.

Die EP 1 517 512 A1 beschreibt ein System zum Fernzugriff auf einen Computer. In dem Computer wird eine Fahrzeugkennnummer abgespeichert. Gleichzeitig kann eine Benutzeridentifikationsnummer abgespeichert werden. Aus diesen beiden Informationen erzeugt der Computer einen verschlüsselten Code. Der Code wird auf einem transportablen Medium gespeichert und selbiges zu einem Kraftfahrzeug transportiert. Dort kann der Code ausgelesen und entschlüsselt werden. Stimmt die Fahrzeugkennnummer mit dem entschlüsselnden Fahrzeug überein, erhält der Benutzer Zugang zum Fahrzeug.

Die EP 0 870 654 A2 beschreibt eine Vorrichtung und ein Verfahren zur fahrerspezifischen Einstellung von-Fahrzeugeinrichtungen. Einzelnen Benutzer sind hierbei unterschiedliche Schlüssel zugeordnet, die für eine Mehrzahl von Fahrzeugen wirksam sind. In dem Schlüssel ist eine Benutzerkennung gespeichert. Überführt ein Benutzer den Schlüssel in ein Kraftfahrzeug, kann selbiges die Benutzerkennung auslesen und durch Funkabfrage bei einem zentralen Berechtigungsregister überprüfen, ob eine Betriebsfreigabe für das Kraftfahrzeug erfolgen soll. Insbesondere können Einstellparameter zu dem Kraftfahrzeug zentral gespeichert und zusammen mit den Berechtigungsdaten per Funk zum Fahrzeug übertragen werden, sobald diese Funkabfrage dorthin gelangt.

Die Schaffung der Möglichkeit eines Datenaustauschs soll für den Benutzer komfortabel sein, andererseits soll aber selbstverständlich eine hohe Datensicherheit gewährleistet sein, es soll also ein Schutz vor Missbrauch bestehen.

Es ist somit Aufgabe der vorliegenden Erfindung, einen Weg aufzuzeigen, wie ein Austausch von Daten zwischen einer zentralen Datenverarbeitungseinrichtung außerhalb und einer zweiten Datenverarbeitungseinheit innerhalb eines Fahrzeugs komfortabel ermöglicht werden kann, wie insbesondere die Möglichkeit eines solchen Datenaustauschs durch einen Benutzer komfortabel hergestellt werden kann.

Die Aufgabe wird durch ein Verfahren mit den Schritten gemäß Patentanspruch 1 gelöst.

Das erfindungsgemäße Verfahren umfasst somit folgende Schritte:
- Bereitstellen einer tragbaren Vorrichtung, in der eine elektronische Kennung gespeichert ist, welche auslesbar ist,
- Bereitstellen einer Einrichtung zum Koppeln der tragbaren Vorrichtung mit dem Fahrzeug, wobei bei Kopplung der tragbaren Vorrichtung mit dem Fahrzeug die elektronische Kennung fahrzeugseitig auslesbar und an die zweite Datenverarbeitungseinheit übermittelbar ist,
- Schaffen oder Nutzen der Möglichkeit des Einrichtens von zumindest einem Benutzerkonto in der zweiten Datenverarbeitungseinheit,
- Bereitstellen einer an das Netzwerk angekoppelten zentralen Datenverarbeitungseinrichtung, in der Benutzerkonten geführt sind,
- Koppeln der tragbaren Vorrichtung an das Fahrzeug,
- Schaffen einer Verknüpfung zu einem vorbestimmten Benutzerkonto der zentralen Datenverarbeitungseinrichtung auf einem vorhandenen oder hierfür eingerichteten, im Folgenden als vorbestimmtes Benutzerkonto bezeichneten Benutzerkonto in der zweiten Datenverarbeitungseinheit, bei der die angegebene elektronische Kennung auf der zweiten Datenverarbeitungseinheit gespeichert und dort dem vorbestimmten Benutzerkonto zugeordnet wird, und, falls diese nicht schon vorher dort abgelegt wurde, Speichern der elektronischen Kennung auch auf dem vorbestimmten Benutzerkonto der zentralen Datenverarbeitungseinheit,
- Herstellen einer Verbindung der zweiten Datenverarbeitungseinheit mit der zentralen Datenverarbeitungseinrichtung über das Netzwerk,
- Übermitteln von Daten auf dem vorbestimmten Benutzerkonto der zentralen Datenverarbeitungseinrichtung an die zweite Datenverarbeitungseinheit, insbesondere auf deren vorbestimmtes Benutzerkonto (und insbesondere während der Dauer der Kopplung), wobei diese Daten nach Herstellen einer Verbindung zwischen einer ersten Datenverarbeitungseinheit und der zentralen Datenverarbeitungseinrichtung über das Netzwerk von ersterer auf letztere zuvor überspielt worden sein können,
und/oder
Übermitteln von Daten auf dem vorbestimmten Benutzerkonto der zweiten Datenverarbeitungseinheit an das verknüpfte (vorbestimmte) Benutzerkonto der zentralen Datenverarbeitungseinrichtung (wobei es sich insbesondere um während der Dauer der Kopplung entstandene und daher dem vorbestimmten Benutzerkonto der zweiten Datenverarbeitungseinheit zugeordnete Daten handelt), wobei diese Daten anschließend durch die erste Datenverarbeitungseinheit von der zentralen Datenverarbeitungseinrichtung ausgelesen werden können.

Das Verfahren ist dadurch gekennzeichnet, dass Benutzerkonten auf der zentralen Datenverarbeitungseinrichtung jeweils als Eingabedaten ein Benutzername und ein Kennwort und/oder weitere Eingabedaten zugeordnet sind, und dass das Schaffen einer Verknüpfung nach dem Koppeln der tragbaren Vorrichtung an das Fahrzeug dadurch erfolgt, dass eine Verbindung der zweiten Datenverarbeitungseinheit über das Netzwerk mit der zentralen Datenverarbeitungseinrichtung hergestellt wird und bei an das Fahrzeug gekoppelter Vorrichtung Eingabedaten eingegeben werden, dass in der zentralen Datenverarbeitungseinrichtung überprüft wird, ob die eingegebenen Eingabedaten korrekt sind, und dass bei korrekt eingegebenen Eingabedaten die elektronische Kennung der mit dem Fahrzeug gekoppelten tragbaren Vorrichtung auf einem Benutzerkonto auf der zweiten Datenverarbeitungseinheit zusammen mit Verbindungsdaten zu dem vorbestimmten Benutzerkonto auf der zentralen Datenverarbeitungseinrichtung abgespeichert wird.

Die tragbare Vorrichtung mit der elektronischen Kennung fungiert bei dem erfindungsgemäßen Verfahren als eine Art Ausweis für den Benutzer. Insbesondere kann das Koppeln der tragbaren Vorrichtung an das Fahrzeug mit einem automatisch darauf folgenden Herstellen einer Verbindung der zweiten Datenverarbeitungseinheit mit der zentralen Datenverarbeitungseinrichtung über das Netzwerk einhergehen, so dass auch gleichzeitig ein hoher Benutzerkomfort gewährleistet ist.

Das erfindungsgemäße Verfahren ermöglicht es insbesondere, dass ein Fahrzeug verschiedene Benutzer unterscheiden kann, für die von unterschiedlichen Benutzerkonten Daten bereitgestellt werden, oder von denen zu unterschiedlichen Benutzerkonten Daten bereitstellbar sind. Es genügt ein einmaliges Verknüpfen, also eine Herstellung einer Assoziation zwischen vorbestimmtem Benutzerkonto im Kraftfahrzeug und vorbestimmtem Benutzer auf der zentralen Datenverarbeitungseinrichtung. Eine Zuordnung zum Benutzerkonto erfolgt später automatisch, wenn die Benutzer unterschiedliche tragbare Vorrichtungen verwenden. Bei Weitergabe des Kraftfahrzeugs an eine andere Benutzerperson muss die Verknüpfung nicht aufgehoben werden, denn eine andere Benutzerperson, welche nicht über die tragbare Vorrichtung verfügt, kann nicht auf die persönlichen Daten zugreifen.

Damit nicht jedermann ohne Weiteres auf Daten aus dem vorbestimmten Benutzerkonto in der zentralen Datenverarbeitungseinrichtung zugreifen kann, damit also keine unbeabsichtigte Assoziation mit einem Benutzerkonto auf der zentralen Datenverarbeitungseinrichtung erfolgt, geht das Verknüpfen erfindungsgemäß mit einer gesonderten Sicherheitsmaßnahme einher. So können wie allgemein üblich dem Benutzerkonto auf der zentralen Datenverarbeitungseinrichtung jeweils als Eingabedaten ein Benutzername und ein Kennwort und/oder weitere Eingabedaten zugeordnet sein. Das Schaffen einer Verknüpfung nach einem Koppeln der tragbaren Vorrichtung an das Kraftfahrzeug erfolgt dann dadurch, dass eine Verbindung der zweiten Datenverarbeitungseinheit über das Netzwerk mit der zentralen Datenverarbeitungseinrichtung hergestellt wird und hierbei Eingabedaten über eine entsprechende Benutzerschnittstelle im Fahrzeug eingegeben werden. Es wird nun in der zentralen Datenverarbeitungseinrichtung überprüft, ob die eingegebenen Eingabedaten korrekt sind, und wenn dies der Fall ist, wird die elektronische Kennung der mit dem Fahrzeug gekoppelten tragbaren Vorrichtung ausgelesen und entweder mit der dem vorbestimmten Benutzerkonto der zentralen Datenverarbeitungseinrichtung bereits zuvor zugeordneten elektronischen Kennung verglichen und bei positivem Ausgang des Vergleichs die elektronische Kennung auf dem vorbestimmten Benutzerkonto auf der zweiten Datenverarbeitungseinheit zusammen mit Verbindungsdaten zum Herstellen einer Verbindung zu dem vorbestimmten Benutzerkonto auf der zentralen Datenverarbeitungseinrichtung abgespeichert, oder dieses Abspeichern auf der zweiten Datenverarbeitungseinheit erfolgt koordiniert mit einem Abspeichern der elektronischen Kennung auf der zentralen Datenverarbeitungseinrichtung. Es wird durch diese Maßnahme gewährleistet, dass eine neue Verknüpfung (Assoziation) allein durch den Kraftfahrzeugführer über die serverbasierte Infrastruktur hergestellt werden kann.

Die Verbindungsdaten können mit den Eingabedaten identisch sein, dies ist aber nicht notwendigerweise so, denn während die Eingabedaten die vom Benutzer per Hand einzugebenden Daten sind, kann es sich bei den Verbindungsdaten um automatisch übermittelbare Daten handeln. Beispielsweise können die Verbindungsdaten eine spezielle Schnittstelle für Kraftfahrzeuge auf der zentralen Datenverarbeitungseinrichtung aufrufen, insbesondere für das vorbestimmte Benutzerkonto. Die zweite Datenverarbeitungseinheit im Fahrzeug greift dann automatisch auf diese spezielle Schnittstelle zu.

Die im Rahmen des erfindungsgemäßen Verfahrens eingegebenen Eingabedaten können der von dem Benutzer selbsttätig eingegebene Benutzername sein, woraufhin dann das Kennwort abgefragt und von dem Benutzer ebenfalls über das Fahrzeug eingegeben wird. Im Falle, dass dem Fahrzeug aufgrund der elektronischen Kennung der Benutzername schon bekannt ist, muss lediglich nur noch das Kennwort abgefragt und über das Fahrzeug eingegeben werden. Dieser Fall tritt dann auf, wenn zu Beginn des Schaffens der Verbindung eine Verbindung zwischen einer ersten Datenverarbeitungseinheit und der zentralen Datenverarbeitungseinrichtung hergestellt und eine Fahrzeugkennung auf dem Benutzerkonto der zentralen Datenverarbeitungseinrichtung abgelegt wird. Nach Herstellen einer Verbindung zwischen dem Kraftfahrzeug (dessen zweiter Datenverarbeitungseinheit) und der zentralen Datenverarbeitungseinrichtung wird dann die Fahrzeugkennung des Fahrzeugs mit der auf dem Benutzerkonto der zentralen Datenverarbeitungseinrichtung abgelegten Fahrzeugkennung verglichen, bevor ein Abspeichern auf einem Benutzerkonto der zweiten Datenverarbeitungseinheit erfolgt.

Um den Datenaustausch besonders komfortabel zu gestalten, wird bei einer bevorzugten Ausführungsform des erfindungsgemäßen Verfahrens nach Schaffen der Verknüpfung bei jedem Koppeln der tragbaren Vorrichtung mit dem Fahrzeug aufgrund der auf der zweiten Datenverarbeitungseinheit gespeicherten Verbindungsdaten selbsttätig eine Verbindung der zweiten Datenverarbeitungseinheit zu dem zugeordneten (vorbestimmten) Benutzerkonto auf der zentralen Datenverarbeitungseinrichtung hergestellt.

Da allgemein bekannt ist, wie ein Mobilfunktelefon an ein Kraftfahrzeug angekoppelt werden kann, und auch bekannt ist, wie Daten aus der SIM-Karte (Subscriber Identity Module-Karte) vom Kraftfahrzeug auslesbar sind, wird bevorzugt als tragbare Vorrichtung ein Mobilfunktelefon mit einer SIM-Karte verwendet. Es kann allerdings auch eine SIM-Karte alleine verwendet werden, wobei diese dann bevorzugt neben der reinen Funktion als Ausweis auch noch beim Betrieb eines in das Fahrzeug integrierten Funktelefons eingesetzt wird.

Die elektronische Kennung kann eine auf der SIM-Karte gespeicherte Telefonnummer sein. Sie kann auch eine auf der SIM-Karte gespeicherte IMSI (International Mobile Subscriber Identity) sein, oder ein Teil der Telefonnummer oder der IMSI sein. In letzterem Fall kann die elektronische Kennung beispielsweise die MSIN (Mobile Subscriber Identification Number) sein, welche bekanntlich Teil der IMSI ist.

Ein erfindungsgemäßes Kraftfahrzeug weist eine Datenverarbeitungseinheit auf, es weist Mittel zum Ankoppeln einer tragbaren Vorrichtung und Auslesen einer elektronischen Kennung aus einer solchen angekoppelten tragbaren Vorrichtung in die Datenverarbeitungseinheit auf, und es weist auch Mittel zum Herstellen einer drahtlosen Verbindung von der Datenverarbeitungseinheit zu einer zentralen Datenverarbeitungseinrichtung auf. Nun sollen die Mittel zum Herstellen im Betrieb eine ausgelesene elektronische Kennung einer angekoppelten tragbaren Vorrichtung berücksichtigen, insbesondere auf ein der elektronischen Kennung zugeordnetes Benutzerkonto in der zentralen Datenverarbeitungseinrichtung zugreifen. Dies wird dann ermöglicht, wenn die Mittel zum Herstellen geeignet ausgelegt sind, z.B. wenn in ihnen ein Computerprogramm abgelegt ist, das bei seinem Ablauf bewirkt, dass die drahtlose Verbindung unter Berücksichtigung der elektronischen Kennung erfolgt, z.B. auf ein der elektronischen Kennung zugeordnetes Benutzerkonto erfolgt.

Erfindungsgemäß umfasst das Kraftfahrzeug einen Speicher, in dem zumindest einem Benutzerkonto eine elektronische Kennung und Verbindungsdaten zuordenbar sind. Vor einem Speichern einer bestimmten elektronischen Kennung ist, wenn sie das erste Mal ausgelesen wird, ein Empfang von Eingabedaten vorgesehen, und es ist ein Vergleich mit entsprechenden Eingabedaten vorgesehen, die in der zentralen Datenverarbeitungseinrichtung abgelegt sind.

Das erfindungsgemäße Kraftfahrzeug ist dadurch gekennzeichnet, dass es dazu eingerichtet ist, das Verfahren gemäß Anspruch 1 durchzuführen.

Die Mittel zum Herstellen einer drahtlosen Verbindung von der Datenverarbeitungseinheit zu einer zentralen Datenverarbeitungseinrichtung lesen bevorzugt im Betrieb diejenigen Verbindungsdaten aus, die im selben Benutzerkonto wie die ausgelesene elektronische Kennung der angekoppelten tragbaren Vorrichtung abgespeichert sind, und sie verwenden diese Verbindungsdaten beim Herstellen der Verbindung. Es kann sich hierbei um eine Adresse einer Schnittstelle der zentralen Datenverarbeitungseinrichtung für Kraftfahrzeuge handeln, welche insbesondere spezifisch für das (vorbestimmte) Benutzerkonto auf der zentralen Datenverarbeitungseinrichtung ist.

Die Mittel zum Herstellen einer drahtlosen Verbindung können selbige bei einem Start des Kraftfahrzeugs (Einstecken des Schlüssels oder Starten des Motors) selbsttätig herstellen. Der Benutzer muss dann nicht durch eine Aktion ein Herstellen der Verbindung bewirken. Typischerweise wird der Benutzer vor dem Starten des Kraftfahrzeugs seine von ihm mitgeführte tragbare Vorrichtung an das Kraftfahrzeug ankoppeln, und dann lassen sich sogleich die benutzerspezifischen Daten, also die Daten für sein Benutzerkonto auf dem Kraftfahrzeug, den Daten auf seinem Benutzerkonto in der zentralen Datenverarbeitungseinrichtung zuordnen und in der Folge Daten austauschen. Somit stehen stets die aktuellen Daten auf dem Kraftfahrzeug bei Beginn seines Betriebs zur Verfügung.

Nachfolgend wird eine bevorzugte Ausführungsform des erfindungsgemäßen Verfahrens unter Bezug auf die Zeichnung beschrieben, wobei
- Fig. 1: die Schrittfolge veranschaulicht, wie ein Datenaustausch erstmals ermöglicht wird und

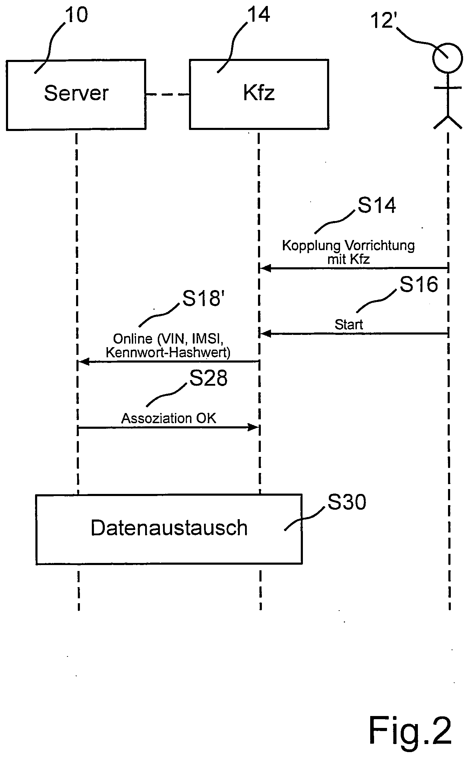

- Fig. 2: eine Schrittfolge veranschaulicht, wie sie nach einmaliger Durchführung der anhand von Fig. 1 erläuterten Schrittfolge im Folgenden stets durchführbar ist.

Auf einem Server 10, der als zentrale Datenverarbeitungseinrichtung fungiert, sind Benutzerkonten geführt. Der Benutzer arbeitet zunächst an einem Personalcomputer (Benutzer 12) und loggt sich gemäß Schritt S10 ausgehend von diesem unter Eingabe seines Benutzernamens und seines Kennworts (Passworts) auf dem Server 10 ein. Gemäß Schritt S12 gibt er die Fahrzeugkennnummer (VIN, Vehicle Identification Number) ein, die auf seinem Benutzerkonto abgespeichert wird. Es soll sich um die Fahrzeugkennnummer desjenigen Kraftfahrzeugs handeln, das der Benutzer später zu benutzen beabsichtigt. Dieses Kraftfahrzeug ist in den Figuren mit 14 bezeichnet. Der Benutzer begibt sich in der Folge von seinem Personalcomputer weg und als Benutzer 12' in das Kraftfahrzeug. Hierbei trägt er die SIM-Karte mit sich, auf der eine elektronische Kennung gespeichert ist. Dies kann durch Mitsichführen eines Mobilfunktelefons mit der SIM-Karte erfolgen. Bei der elektronischen Kennung handelt es sich im vorliegenden Beispiel um eine IMSI (International Mobile Subscriber Identity), die in GSM- und UMTS-Mobilfunknetzen der eindeutigen Identifizierung von Netzteilnehmern dient, also als interne Teilnehmerkennung dient. Neben weiteren Daten wird die IMSI auf einer speziellen Chipkarte, dem sogenannten SIM (Suscriber Identity Module) gespeichert. Die IMSI-Nummer wird weltweit einmalig pro SIM-Karte von den Mobilfunknetzbetreibern vergeben. Die IMSI hat normalerweise nichts mit der Telefonnummer der SIM-Karte zu tun (vergleiche zum Thema "IMSI" Wikipedia, die freie Enzyklopädie).

Im Schritt S14 wird die SIM-Karte, nämlich das Mobilfunktelefon mit der SIM-Karte, mit dem Kraftfahrzeug gekoppelt. Dies bedeutet, dass zwischen dem Mobilfunktelefon und einer Datenverarbeitungseinheit des Kraftfahrzeugs 14 eine Kommunikation möglich ist, was beispielsweise über den Bluetooth-Standard erfolgen kann.

Im Schritt 16 startet der Benutzer 12' nun das Kraftfahrzeug. Die Schritte 14 und 16 können auch in umgekehrter Reihenfolge durchgeführt werden.

Das Kraftfahrzeug liest nun die IMSI aus der in Schritt S14 angekoppelten Vorrichtung aus und stellt eine drahtlose Verbindung zu dem Server 10 her, z.B. über Internet, und teilt hierbei gemäß Schritt S18 seine Fahrzeugkennnummer (VIN) und die elektronische Kennung der Vorrichtung (IMSI) mit.

Im Server wird nun nach einem Benutzerkonto gesucht, auf dem die VIN abgelegt ist. Anschließend teilt der Server 10 den Benutzernamen in Schritt S20 dem Kraftfahrzeug 14 mit. Alternativ gibt der Benutzer 12' seinen Benutzernamen selbst ein. Im Kraftfahrzeug 14 erfolgt gemäß Schritt S22 eine Kennwortabfrage an den Benutzer 12'. Der Benutzer 12' gibt im Schritt S24 sein Kennwort ein. Das Kraftfahrzeug 14 sendet nun ein Signal an den Server 10, um mitzuteilen, dass die VIN des Kraftfahrzeugs 14, die IMSI der tragbaren Vorrichtung und der Hashwert des Kennworts miteinander verknüpft werden sollen (Schritt S26). Im Schritt S28 teilt der Server 10 dann dem Kraftfahrzeug 14 mit, dass eine solche Verknüpfung in ein und demselben Benutzerkonto auf dem Server 10 erfolgt ist. Hierzu kann die IMSI auf dem Benutzerkonto im Server gespeichert werden. Im nachfolgenden Schritt S30 wird sodann ein Datenaustausch ermöglicht und durchgeführt, es werden nämlich Daten vom Server 10 an das Kraftfahrzeug 14 übermittelt oder umgekehrt im weiteren Verlauf Daten vom Kraftfahrzeug 14 an den Server übermittelt und dort auf dem Benutzerkonto abgespeichert.

Es müssen nun nicht jedes Mal erneut die Schritte S18, S20, S22, S24 und S26 durchgeführt werden. Insbesondere kann es als ausreichend sicher angesehen werden, wenn das Kennwort ein einziges Mal abgefragt wird und hierbei der Kombination von tragbarer Vorrichtung mit der IMSI einerseits und dem Kraftfahrzeug 14 mit seiner VIN andererseits zugeordnet wird. Es werden nun in dem Kraftfahrzeug 14 diese drei Daten VIN, IMSI und Kennwort-Hashwert gespeichert.

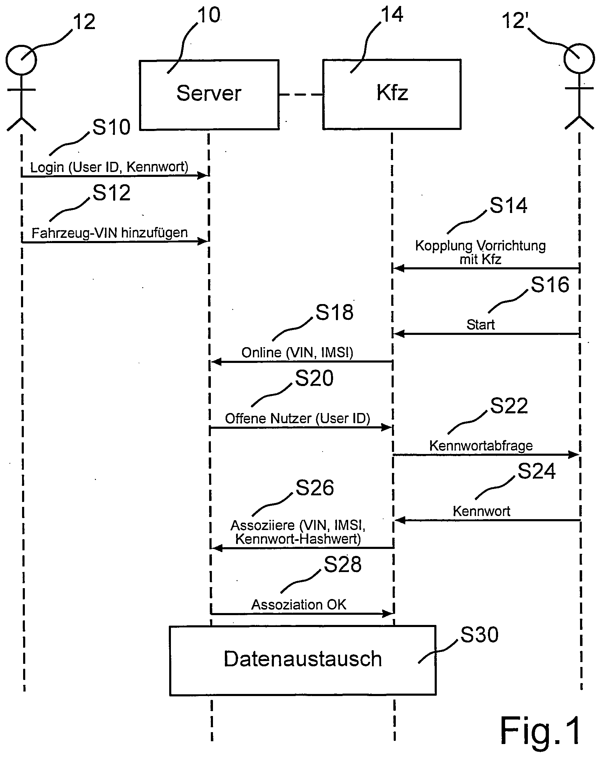

Hat nun nach Beendigung des anhand von Fig. 1 erläuterten Verfahrens der Benutzer 12' das Kraftfahrzeug verlassen und sein Mobilfunktelefon mitgenommen und betritt der Benutzer 12' des Kraftfahrzeugs 14 dieses später wieder erneut, so kann er abermals gemäß Schritt S14 das Mobilfunktelefon mit dem Kraftfahrzeug 14 koppeln und anschließend das Kraftfahrzeug gemäß Schritt S16 starten (oder diese Schritte in umgekehrter Reihenfolge durchführen). Das Kraftfahrzeug 14 liest aus der angekoppelten Vorrichtung die IMSI und kann aufgrund eines im Kraftfahrzeug geführten Benutzerkontos die Kombination von IMSI und Kennwort-Hashwert mit der Kraftfahrzeugkennung VIN ermitteln. Diese drei Größen werden nun gemäß Schritt S18' an den Server 10 gesandt. Der Server 10 teilt mit, dass diese Kombination korrekt ist, es wird also vom Schritt S18' gleich zum Schritt S28 übergegangen. Anschließend kann gemäß Schritt S30 ein Datenaustausch erfolgen.

Vorliegend wird zwischen dem Server 10 als zentraler Datenverarbeitungseinrichtung und dem Kraftfahrzeug 14, genauer gesagt dessen Datenverarbeitungseinheit, eine Verknüpfung hergestellt, in dem gleiche Daten auf jeweils zugehörigen Benutzerkonten geführt werden: Im Server wird die Kraftfahrzeugnummer VIN in einem Benutzerkonto abgespeichert, zu dem ein Kennwort gilt. Im Kraftfahrzeug wird neben der ohnehin bekannten VIN eine IMSI gespeichert und zugehörig zu dieser ein Kennwort-Hashwert. Wird nun gemäß Schritt S14 eine Vorrichtung mit genau dieser elektronischen Kennung IMSI mit dem Kraftfahrzeug gekoppelt, stellen Server 10 und Kraftfahrzeug 14 eine Verknüpfung jeweiliger Benutzerkonten her, und ein Datenaustausch wird ermöglicht. In der Folge wird das Verknüpftsein anhand der spezifischen Kombination von VIN und IMSI sowie Kennwort-Hashwert erkannt.

## Patentansprüche

1. Verfahren zum Ermöglichen des Austauschens von Daten zwischen einer zentralen, mit einem Netzwerk verbundenen oder verbindbaren Datenverarbeitungseinrichtung und einer zweiten Datenverarbeitungseinheit in einem Kraftfahrzeug, die zur drahtlosen Verbindung mit dem Netzwerk eingerichtet ist, mit den Schritten:
- Bereitstellen einer tragbaren Vorrichtung, in der eine elektronische Kennung gespeichert ist, welche auslesbar ist,
- Bereitstellen einer Einrichtung zum Koppeln der tragbaren Vorrichtung mit dem Kraftfahrzeug, wobei bei Kopplung der tragbaren Vorrichtung mit dem Kraftfahrzeug die elektronische Kennung auslesbar und an die zweite Datenverarbeitungseinheit übermittelbar ist,
- Schaffen oder Nutzen der Möglichkeit des Einrichtens von zumindest einem Benutzerkonto in der zweiten Datenverarbeitungseinheit,
- Bereitstellen der an das Netzwerk angekoppelten zentralen Datenverarbeitungseinrichtung (10), in der Benutzerkonten geführt sind,
- Koppeln (S14) der tragbaren Vorrichtung an das Kraftfahrzeug,
- Schaffen einer Verknüpfung zu einem vorbestimmten Benutzerkonto der zentralen Datenverarbeitungseinrichtung (10) auf einem vorhandenen oder hierfür eingerichteten vorbestimmten Benutzerkonto in der zweiten Datenverarbeitungseinheit, bei der die elektronische Kennung auf der zweiten Datenverarbeitungseinheit gespeichert und dort dem vorbestimmten Benutzerkonto zugeordnet wird, und bei der gewährleistet wird, dass die elektronische Kennung auf der zentralen Datenverarbeitungseinrichtung (10) gespeichert ist und dort dem vorbestimmten Benutzerkonto zugeordnet ist,
- Herstellen einer Verbindung der zweiten Datenverarbeitungseinheit mit der zentralen Datenverarbeitungseinrichtung (10) über das Netzwerk,
- Übermitteln (S30) von Daten auf dem Benutzerkonto der zentralen Datenverarbeitungseinrichtung (10) an die zweite Datenverarbeitungseinheit und/oder Übermitteln (S30) von Daten auf dem vorbestimmten Benutzerkonto der zweiten Datenverarbeitungseinheit an das verknüpfte vorbestimmte Benutzerkonto der zentralen Datenverarbeitungseinrichtung (10),
**dadurch gekennzeichnet, dass**
- Benutzerkonten auf der zentralen Datenverarbeitungseinrichtung (10) jeweils als Eingabedaten ein Benutzername und ein Kennwort und/oder weitere Eingabedaten zugeordnet sind, und dass das Schaffen einer Verknüpfung nach dem Koppeln (S14) der tragbaren Vorrichtung an das Kraftfahrzeug dadurch erfolgt, dass eine Verbindung der zweiten Datenverarbeitungseinheit über das Netzwerk mit der zentralen Datenverarbeitungseinrichtung (10) hergestellt wird und bei an das Kraftfahrzug gekoppelter Vorrichtung Eingabedaten eingegeben werden (S24), dass in der zentralen Datenverarbeitungseinrichtung überprüft wird, ob die eingegebenen Eingabedaten korrekt sind, und dass bei korrekt eingegebenen Eingabedaten die elektronische Kennung der mit dem Kraftfahrzeug gekoppelten tragbaren Vorrichtung auf einem Benutzerkonto auf der zweiten Datenverarbeitungseinheit zusammen mit Verbindungsdaten zu dem vorbestimmten Benutzerkonto auf der zentralen Datenverarbeitungseinrichtung (10) abgespeichert werden.

2. Verfahren nach Anspruch 1,
**dadurch gekennzeichnet, dass**
zu Beginn des Schaffens der Verknüpfung eine Verbindung zwischen einer ersten Datenverarbeitungseinheit und der zentralen Datenverarbeitungseinrichtung (10) hergestellt (S10) und eine Fahrzeugkennung auf dem Benutzerkonto der zentralen Datenverarbeitungseinrichtung (10) abgelegt (S12) wird, und dass die Fahrzeugkennung des Kraftfahrzeugs mit der auf dem vorbestimmten Benutzerkonto der zentralen Datenverarbeitungseinrichtung (10) abgelegten Fahrzeugkennung verglichen wird, bevor ein Abspeichern auf einem vorbestimmten Benutzerkonto der zweiten Datenverarbeitungseinheit erfolgt.

3. Verfahren nach Anspruch 1 oder 2,
**dadurch gekennzeichnet, dass**
nach Schaffen der Verknüpfung bei jedem Koppeln der tragbaren Vorrichtung mit dem Kraftfahrzeug (14) aufgrund der auf der zweiten Datenverarbeitungseinheit gespeicherten Verbindungsdaten selbsttätig eine Verbindung der zweiten Datenverarbeitungseinheit zu dem zugeordneten Benutzerkonto auf der zentralen Datenverarbeitungseinrichtung (10) hergestellt wird.

4. Verfahren nach einem der Ansprüche 1 bis 3;
**dadurch gekennzeichnet, dass**
als tragbare Vorrichtung ein Mobilfunktelefon mit einer SIM-Karte, Subscriber Identity Module-Karte, verwendet wird.

5. Verfahren nach einem der Ansprüche 1 bis 3,
**dadurch gekennzeichnet, dass**
als tragbare Vorrichtung eine SIM-Karte, Subscriber Identity Module-Karte, verwendet wird.

6. Verfahren nach Anspruch 4 oder 5,
**dadurch gekennzeichnet, dass**
die elektronische Kennung eine auf der SIM-Karte gespeicherte Telefonnummer oder IMSI, International Mobile Subscriber Identity, oder ein Teil der Telefonnummer oder IMSI ist.

7. Kraftfahrzeug (14) mit einer zweiten Datenverarbeitungseinheit, mit Mitteln zum Ankoppeln einer tragbaren Vorrichtung und Auslesen einer elektronischen Kennung aus der angekoppelten tragbaren Vorrichtung in die zweite Datenverarbeitungseinheit, und mit Mitteln zum Herstellen einer drahtlosen Verbindung von der zweiten Datenverarbeitungseinheit zu einer zentralen Datenverarbeitungseinrichtung (10), wobei die Mittel zum Herstellen einer drahtlosen Verbindung von der zweiten Datenverarbeitungseinheit zu der zentralen Datenverarbeitungseinrichtung (10) im Betrieb die ausgelesene elektronische Kennung der angekoppelten tragbaren Vorrichtung berücksichtigen, und einem Speicher, in dem zumindest einem Benutzerkonto eine elektronische Kennung und Verbindungsdaten zuordenbar sind, wobei vor einem Speichern einer bestimmten elektronischen Kennung bei ihrem erstmaligen Auslesen ein Empfang von Eingabedaten vorgesehen ist, wobei ein Vergleich mit entsprechenden Eingabedaten vorgesehen ist, die in der zentralen Datenverarbeitungseinrichtung (10) abgelegt sind,
**dadurch gekennzeichnet, dass**
das Kraftfahrzeug (14) dazu eingerichtet ist, das Verfahren gemäß einem der Ansprüche 1 sowie 4 bis 6 durchzuführen.

8. Kraftfahrzeug (14) nach Anspruch 7, wobei die Mittel zum Herstellen einer drahtlosen Verbindung von der zweiten Datenverarbeitungseinheit zu der zentralen Datenverarbeitungseinrichtung (10) im Betrieb diejenigen Verbindungsdaten auslesen, die im selben Benutzerkonto wie die ausgelesene elektronische Kennung der angekoppelten tragbaren Vorrichtung abgespeichert sind und diese Verbindungsdaten beim Herstellen der Verbindung verwenden.

9. Kraftfahrzeug nach Anspruch 7 oder 8,
**dadurch gekennzeichnet, dass**
die Mittel zum Herstellen einer Verbindung von der zweiten Datenverarbeitungseinheit zu der zentralen Datenverarbeitungseinrichtung (10) bei einem Start (S16) des Kraftfahrzeugs (14) selbsttätig die Verbindung herstellen.

10. Kraftfahrzeug nach einem der Ansprüche 7 bis 9,
**dadurch gekennzeichnet, dass**
als tragbare Vorrichtung eine SIM-Karte oder ein Mobilfunktelefon mit einer SIM-Karte, Subscriber Identity Module-Karte, verwendbar ist und als elektronische Kennung der tragbaren Vorrichtung eine auf der SIM-Karte gespeicherte IMSI, International Mobile Subscriber Identity, dient.

## Claims

1. Method for enabling the exchange of data between a central data processing device, which is connected or can be connected to a network, and a second data processing unit in a motor vehicle, which is configured for wireless connection to the network, having the steps of:
- providing a portable device, in which an electronic identifier is stored, which can be output,
- providing a device for coupling the portable device to the motor vehicle, wherein, when coupling the portable device to the motor vehicle, the electronic identifier can be output and transmitted to the second data processing unit,
- providing or making use of the possibility of setting up at least one user account in the second data processing unit,
- providing the central data processing unit (10), which is coupled to the network and in which user accounts are managed,
- coupling (S14) the portable device to the motor vehicle,
- providing a link to a predetermined user account of the central data processing device (10) on a predetermined user account, which is provided or configured for this purpose in the second data processing unit, in which the electronic identifier is stored on the second data processing unit and is associated at that location with the predetermined user account, and in which it is ensured that the electronic identifier is stored on the central data processing device (10) and is associated at that location with the predetermined user account,
- generating a connection of the second data processing unit to the central data processing device (10) via the network,
- transmitting (S30) data on the user account of the central data processing device (10) to the second data processing unit and/or transmitting (S30) data on the predetermined user account of the second data processing unit to the linked predetermined user account of the central data processing device (10),
**characterised in that**
- a user name and a password and/or other input data are associated with user accounts on the central data processing device (10) as input data in each case, and **in that** the providing of a link after the portable device has been coupled (S14) to the motor vehicle is carried out by a connection of the second data processing unit to the central data processing device (10) being produced via the network and, when the device is coupled to the motor vehicle, input data are entered (S24), **in that** it is verified in the central data processing device, whether the input data, which have been entered, are correct, and **in that**, if the input data have been correctly entered, the electronic identifier of the portable device, which is coupled to the motor vehicle, is stored on a user account on the second data processing unit together with connection data to the predetermined user account on the central data processing unit (10).

2. Method according to claim 1,
**characterised in that**
at the beginning of the providing of the link a connection is made (S10) between a first data processing unit and the central data processing device (10) and a vehicle identifier is stored (S12) on the user account of the central data processing device (10), and **in that** the vehicle identifier of the motor vehicle is compared with the vehicle identifier stored on the predetermined user account of the central data processing device (10) before being stored on a predetermined user account of the second data processing unit.

3. Method according to claim 1 or claim 2,
**characterised in that**,
after the link has been provided, each time the portable device is coupled to the motor vehicle (14) as a result of the connection data stored on the second data processing unit, a connection of the second data processing unit to the associated user account on the central data processing device (10) is generated independently.

4. Method according to any one of claims 1 to 3,
**characterised in that**
a mobile telephone with a SIM card, Subscriber Identity Module card, is used as a portable device.

5. Method according to any one of claims 1 to 3,
**characterised in that**
a SIM card, Subscriber Identity Module card, is used as a portable device.

6. Method according to claim 4 or 5,
**characterised in that**
the electronic identifier is a telephone number or IMSI, International Mobile Subscriber Identity, which is stored on the SIM card, or a portion of the telephone number or IMSI.

7. Motor vehicle (14) having a second data processing unit, having means for coupling a portable device and outputting an electronic identifier from the coupled portable device into the second data processing unit, and having means for generating a wireless connection from the second data processing unit to a central data processing device (10), wherein the means for producing a wireless connection from the second data processing unit to the central data processing device (10) take into account during operation the output electronic identifier of the coupled portable device, and a memory, in which an electronic identifier and connection data can be associated with at least one user account, wherein before storing a specific electronic identifier when it is first output, there is provision for input data to be received, wherein provision is made for a comparison with corresponding input data which are stored in the central data processing device (10),
**characterised in that**
the motor vehicle (14) is configured to carry out the method according to any one of claims 1 and 4 to 6.

8. Motor vehicle (14) according to claim 7, wherein the means for generating a wireless connection from the second data processing unit to the central data processing unit (10) during operation output those connection data, which are stored in the same user account as the output electronic identifier of the coupled portable device, and use these connection data when the connection is produced.

9. Motor vehicle according to claim 7 or 8,
**characterised in that**
the means for generating a connection from the second data processing unit to the central data processing device (10) generate the connection independently, when the motor vehicle (14) is started (S16).

10. Motor vehicle according to any one of claims 7 to 9,
**characterised in that**
a SIM card or a mobile telephone with a SIM card, Subscriber Identity Module card, can be used as a portable device and an IMSI, International Mobile Subscriber Identity, which is stored on the SIM card, is used as an electronic identifier of the portable device.

## Revendications

1. Procédé pour permettre l'échange de données entre un ordinateur central, relié ou pouvant être relié à un réseau, et un deuxième ordinateur qui est dans un véhicule automobile et qui est équipé pour la liaison sans fil avec le réseau,
comprenant les étapes :
- mise à disposition d'un dispositif portable, dans lequel est mémorisé un identifiant électronique qui peut être lu,
- mise à disposition d'un dispositif pour le couplage du dispositif portable au véhicule automobile, l'identifiant électronique, lors du couplage du dispositif portable au véhicule automobile, pouvant être lu et être transmis au deuxième ordinateur,
- création ou utilisation de la possibilité de la création d'au moins un compte utilisateur dans le deuxième ordinateur,
- mise à disposition de l'ordinateur central (10) qui est connecté au réseau et dans lequel des comptes utilisateurs sont gérés,
- couplage (S14) du dispositif portable au véhicule automobile,
- création d'un lien vers un compte utilisateur prédéterminé de l'ordinateur central (10) sur un compte utilisateur prédéterminé existant ou créé à cet effet dans le deuxième ordinateur, lien selon lequel l'identifiant électronique est mémorisé sur le deuxième ordinateur et est associé là au compte utilisateur prédéterminé et selon lequel il est garanti que l'identifiant électronique est mémorisé sur l'ordinateur central (10) et est associé là au compte utilisateur prédéterminé,
- établissement d'une liaison du deuxième ordinateur avec l'ordinateur central (10) par l'intermédiaire du réseau,
- transmission (S30) de données sur le compte utilisateur de l'ordinateur central (10) vers le deuxième ordinateur et/ou transmission (S30) de données sur le compte utilisateur du deuxième ordinateur vers le compte utilisateur prédéterminé lié de l'ordinateur central (10),
**caractérisé en ce que**
- comme données d'entrée, il est associé à chaque fois à des comptes utilisateurs sur l'ordinateur central (10) un nom d'utilisateur et un mot de passe et/ou d'autres données d'entrée et la création d'un lien après le couplage (S14) du dispositif portable au véhicule automobile s'effectue par le fait qu'on établit une liaison du deuxième ordinateur à l'ordinateur central (10) par l'intermédiaire du réseau et on entre (S24) des données d'entrée au niveau du dispositif couplé au véhicule automobile, qu'on vérifie dans l'ordinateur central si les données d'entrée entrées sont correctes et, dans le cas de données d'entrée entrées correctes, on mémorise l'identifiant électronique du dispositif portable couplé au véhicule automobile sur un compte utilisateur sur le deuxième ordinateur conjointement à des données de liaison pour le compte utilisateur prédéterminé sur l'ordinateur central (10).

2. Procédé selon la revendication 1, **caractérisé en ce que**, au début de la création du lien, on établit (S10) une liaison entre un premier ordinateur et l'ordinateur central (10) et on enregistre (S12) un identifiant de véhicule sur le compte utilisateur de l'ordinateur central (10) et **en ce qu'**on compare l'identifiant de véhicule du véhicule automobile à l'identifiant de véhicule enregistré sur le compte utilisateur prédéterminé de l'ordinateur central (10) avant d'effectuer une mémorisation sur un compte utilisateur prédéterminé du deuxième ordinateur.

3. Procédé selon la revendication 1 ou 2, **caractérisé en ce que**, après la création du lien à chaque couplage du dispositif portable avec le véhicule automobile (14), on établit automatiquement, sur la base des données de liaison mémorisées sur le deuxième ordinateur, une liaison du deuxième ordinateur au compte utilisateur associé sur l'ordinateur central (10).

4. Procédé selon l'une quelconque des revendications 1 à 3, **caractérisé en ce qu'**on utilise comme dispositif portable un téléphone mobile avec une carte SIM - Subscriber Identity Module.

5. Procédé selon l'une des revendications 1 à 3, **caractérisé en ce qu'**on utilise comme dispositif portable une carte SIM - Subscriber Identity Module.

6. Procédé selon la revendication 4 ou 5, **caractérisé en ce que** l'identifiant électronique est un numéro de téléphone mémorisé sur la carte SIM ou numéro IMSI, International Mobile Subscriber Identity, ou une partie du numéro de téléphone ou numéro IMSI.

7. Véhicule automobile (14) avec un deuxième ordinateur, avec des moyens pour connecter un dispositif portable et pour lire un identifiant électronique dans le dispositif portable connecté vers le deuxième ordinateur et avec des moyens pour établir une liaison sans fil du deuxième ordinateur à un ordinateur central (10), les moyens pour établir une liaison sans fil du deuxième ordinateur à l'ordinateur central (10) prenant en compte lors du fonctionnement l'identifiant électronique lu du dispositif portable connecté, et avec une mémoire dans laquelle un identifiant électronique et des données de liaison peuvent être associés à au moins un compte utilisateur, une réception de données d'entrée étant prévue avant une mémorisation d'un identifiant électronique déterminé lors de sa première lecture, une comparaison avec des données d'entrée correspondantes qui sont enregistrées dans l'ordinateur central (10) étant prévue,
**caractérisé en ce que** le véhicule automobile (14) est équipé pour mettre en oeuvre le procédé selon l'une quelconque des revendications 1 ainsi que 4 à 6.

8. Véhicule automobile (14) selon la revendication 7, les moyens pour établir une liaison sans fil du deuxième ordinateur à l'ordinateur central (10) lisant lors du fonctionnement les données de liaison qui sont mémorisées dans le même compte utilisateur que l'identifiant électronique lu du dispositif portable connecté et utilisant ces données de liaison lors de l'établissement de la liaison.

9. Véhicule automobile selon la revendication 7 ou 8, **caractérisé en ce que** les moyens pour établir une liaison du deuxième ordinateur à l'ordinateur central (10) établissent automatiquement la liaison lors d'un démarrage (S16) du véhicule automobile (14).

10. Véhicule automobile selon l'une quelconque des revendications 7 à 9, **caractérisé en ce qu'**une carte SIM ou un téléphone mobile avec une carte SIM - Subscriber Identity Module - est utilisable comme dispositif portable et un IMSI, International Mobile Subscriber Identity, mémorisé sur la carte SIM sert d'identifiant électronique du dispositif portable.
